# EUROPEAN PATENT SPECIFICATION

(11) **EP 2 946 974 B1**
(45) Date of publication and mention of the grant of the patent: **23.11.2016**
(21) Application number: 14168820.0
(22) Date of filing: 19.05.2014
(51) Int. Cl.: B60R 9/06, B60R 9/048, B60R 9/10

(54) **Bicycle retaining device**
Fahrradhaltevorrichtung
Dispositif de retenue de bicyclette

(43) Date of publication of application: 25.11.2015
(73) Proprietor: Thule Sweden AB, 330 33 Hillerstorp (SE)
(72) Inventor: Lindell, Morgan, SE-331 35 Värnamo (SE); Lindholm, Olof, SE-331 35 Värnamo (SE); Nilvius, Anders, SE-331 35 Värnamo (SE); Arvidsson, Andreas, SE-576 91 Sävsjö (SE)
(74) Representative: Valea AB

(56) References cited:
- WO-A1-96/31367
- WO-A1-03/106221
- DE-A1- 19 934 384
- GB-A- 2 281 755

## Description

### TECHNICAL FIELD

The disclosure pertains to a bicycle retaining device for retaining a bicycle in a bicycle carrier arrangement on a transporting vehicle. The bicycle retaining device comprises an elongated supporting arm extending in a longitudinal direction of the retaining device and comprising a retaining claw arranged at an outer end of the supporting arm. The retaining claw is a two-part clamping device comprising a first claw part having a first bicycle abutment surface and a second claw part having a second bicycle abutment surface and being arranged with the second bicycle abutment surface facing the first bicycle abutment surface. The first claw part is rigidly joined to the supporting arm while the second claw part is arranged to be movable with respect to the supporting arm and the first claw part such that a distance between the first and the second bicycle abutment surfaces is adjustable between a maximum distance and a minimum distance

### BACKGROUND

In order to simplify transport of bicycles by means of a vehicle such as a car or a recreational vehicle, different types of bicycle carrier arrangements are provided. The two main types of bicycle carrier arrangements which are available are those adapted for mounting on a vehicle roof and those adapted for mounting at the rear of a vehicle. Roof mounted carrier arrangements usually comprise a rail section which is mounted on a roof rack in the longitudinal direction of the vehicle, i.e. in the travelling direction of the vehicle and various clamps and other fastening devices for securing the bicycle in an upright position with the wheels resting in the rail section. Rear mounted carrier arrangements may include a supporting arm which a bicycle clamping device at one end and may also comprise a rail for supporting the wheels of the bicycle as well as further clamps and fastening devices.

When loading a bicycle onto the previously known bicycle carrier arrangements, a difficulty arises in the initial phase of securing the bicycle to the carrier arrangement when a person performing the loading operation often experiences a need for more than two hands in order to be able to hold the bicycle in place while applying and tightening different securement devices. This may be a particular problem when loading a bicycle onto a carrier arrangement on a vehicle roof, where it may be difficult to reach the bicycle and get a proper hold on it even if two persons are involved in the loading operation.

In order to facilitate loading of a bicycle on a carrier arrangement, it has been suggested in WO03/106221 to provide the carrier arrangement, according to the preamble of claim 1, with a bicycle supporting arm which
is attached to the carrier arrangement at one end, and which has a claw grip at the opposite free end. The carrier arrangement is further provided with a wheel supporting rail which has an inclined portion in one wheel supporting area of the rail whereby a bicycle loaded onto the rail is caused to roll in the rail until a part of the bicycle frame comes into active engagement with at least one of the jaws of the claw grip.

Although the arrangement in WO03/106221 facilitates loading of a bicycle on the carrier arrangement, it has been found that the stability of the bicycle in the initial loading phase is unsatisfactory and that there is still a risk that the bicycle falls out of the carrier arrangement when manipulating and tightening the securement devices of the carrier arrangement.

Accordingly, there remains a need for an improved bicycle carrier arrangement, and for a retaining device which can stabilise a bicycle in a loading position during an initial loading phase of a bicycle in a bicycle carrier arrangement.

### SUMMARY

It is an object of the present invention to alleviate the stability problems encountered when loading a bicycle into a bicycle carrier arrangement.

This object may be achieved by the subject-matter of claims 1 and 10. Embodiments of the claimed invention are set forth in the appended dependent claims, in the following description, and in the drawings.

As disclosed herein, there is provided a bicycle retaining device for retaining a bicycle in a bicycle carrier arrangement on a transporting vehicle, the bicycle retaining device comprising an elongated supporting arm extending in a longitudinal direction of the retaining device, the retaining device comprising a retaining claw being arranged at an outer end of the supporting arm, the retaining claw comprising a first claw part comprising a first bicycle abutment surface and being connected to the supporting arm, and a second claw part comprising a second bicycle abutment surface, the second claw part being arranged with the second bicycle abutment surface facing the first bicycle abutment surface, the second claw part being arranged to be movable with respect to the supporting arm and the first claw part such that a distance between the first and the second bicycle abutment surfaces is adjustable between a maximum distance and a minimum distance. The first claw part has an inner end proximal to the supporting arm and an outer end distal from the supporting arm, and the second claw part has an inner end proximal to the supporting arm and an outer end distal from the supporting arm, wherein a catch is arranged at the outer end of the first claw part, the catch having a catching position with the catch extending from the outer end of the first claw part in a direction toward the outer end of the second claw part, the catch being arranged to partially bridge the maximum distance between the first and the second abutment surfaces.

The second claw part may be positioned outward of the first claw part at the outer end of the supporting arm, implying that the outer claw part is the claw part that is movable for opening and closing the retaining claw while the inner claw part is rigidly joined to the supporting arm.

Alternatively the second, movable claw part may be positioned inward of the first claw part at the outer end of the supporting arm, implying that the inner claw part may be the claw part that is movable for opening and closing the retaining claw while the outer claw part is rigidly joined to the supporting arm.

The first claw part may be rigidly joined to the supporting arm and may be integrally formed with the supporting arm or may be formed as a separate element that has been attached to the supporting arm in a fixed position.

The catch protrudes from the outer end of the first claw part and partially closes the gap between the first claw part and the second claw part of the bicycle retaining device when the retaining claw is in a maximum open position with a maximum distance between the claw parts. When a bicycle frame element is inserted between the first and second claw parts and has been brought into abutment with the first bicycle abutment surface, the catch prevents the bicycle frame element from accidentally moving out from between the claw parts. The only way the bicycle frame element can be disengaged from between the claw parts is by purposeful movement of the bicycle retaining device or the bicycle such that the bicycle frame element comes into alignment with the non-closed part of the gap between the claw parts and can be moved out of the retaining claw.

The claw parts may be made from any suitable material or combination of materials, including polymeric materials, composite materials, and metal. The bicycle abutment surfaces are preferably formed from a softer and preferably compressible material such as natural or synthetic rubber which may act as a shock absorber during use of the bicycle retaining device. Such shock absorbing material may also be applied on the surface of the catch which is facing into the gap between the first and second claw parts. However, it is generally preferred that the catch be mainly made from a rigid and shock resistant material. Accordingly, the catch may be made from the same types of material as the claw parts and may be made as a separate part which is attached to the first claw part or may be made integral with the first claw part, e.g. by molding techniques.

When in the catching position the loading gap, i.e. the non-closed part of the gap between the first and second claw parts in the loading position of the retaining claw should be large enough to allow a bicycle frame element to be comfortably inserted between the claw parts. To this end, the catch may be arranged to bridge at least 25% of the maximum distance between the first and the second abutment surfaces, but not more than 55% of the maximum distance between the first and the second abutment surfaces, such as from 30% to 45% of the maximum distance between the first and the second abutment surfaces.

It is to be understood that the bicycle retaining device may be designed with a loading gap which is adapted to the size of a specific bicycle frame element or may be designed such that it will fit a range of differently sized bicycle frame elements. In the latter case, the bicycle retaining device may be used on differently sized frame elements in different retaining positions on the same bicycle and/or corresponding but differently sized frame elements on different bicycles. Bicycle frame elements may, for instance, have a circular or oval cross-section. The size of a circular bicycle frame element commonly ranges from 22 millimeters to 80 millimeters. An oval bicycle frame element is usually somewhat larger, such as approximately 80x100 millimeters.

In order to accommodate commonly occurring bicycle frame elements, the distance between the first claw part including the catch and the second claw part in the maximum open position of the retaining claw may be in the order of 90 mm - 130 mm, as measured from the tip of the catch to the outer end of the second claw part. This distance defines the size of the entrance opening into the retaining claw. The catch may have a height as measured from the first bicycle abutment surface at the outer end of the first claw part of from 25 mm to 50 mm. The height is measured in the longitudinal direction of the bicycle retaining device.

The bicycle abutment surfaces may have a lateral extension of from 60 - 100 mm, such as from 80 - 90 mm. The bicycle abutment surfaces may have the same or different lateral extensions, as set out herein.

In a bicycle retaining device as disclosed herein, a lateral extension of the first claw part away from the supporting arm may be greater than a lateral extension of the second claw part away from the supporting arm, whereby the catch being arranged at the outer end of the first claw part is positioned laterally outward of the outer end of the second claw part in a lateral direction of the bicycle retaining device. Accordingly, the first claw part with the catch may be arranged as a protruding jaw with respect to the second claw part. When closing the retaining claw, in particular when the bicycle abutment surfaces of the retaining jaw is at the minimum distance from each other, the catch extends in the longitudinal direction of the bicycle retaining device outward of the outer end of the second claw part. In other words, the extension of the second claw part in the lateral direction is smaller than the distance between the supporting arm and the catch.

The catch may be attached to the first claw part with a hinge and be foldable inward at the hinge towards the first bicycle abutment surface to assume a temporary loading position. Accordingly, the catch may be arranged such that it tilts inward when a bicycle frame element is being inserted between the claw parts, thus temporarily widening the loading gap between the claw parts. The catch is preferably spring biased towards the catching position, such that it automatically returns to the catching position once the bicycle frame element has been moved into the retaining claw.

It is also conceivable that the catch is made retractable, such that it may be moved out of the loading gap by pulling or pushing in the longitudinal direction of the bicycle retaining device. Also in this case, it may be preferred that the catch is spring biased towards the catching position, such that it will automatically return to the catching position once the bicycle frame element has been moved into the retaining claw. The catch may have a slanted surface facing out of the claw grip, such that a bicycle frame element being pushed into the claw grip will contact the slanted surface and press the catch downward against the biasing force until the frame element has passed the catch. The catch may be arranged such that it protrudes out from the first claw part on a side opposite the first bicycle abutment surface when the catch is in the retracted position. Alternatively, the first claw part may be designed such that it can accommodate the retracted catch inside the claw part.

The bicycle retaining device may comprise a locking arrangement for locking the second claw in one or more bicycle retaining positions in relation to the first claw part. Multiple retaining positions may be arranged stepwise or continuously in the longitudinal direction of the bicycle retaining device.

Although generally elongate and having a main extension in a longitudinal direction thereof, the supporting arm of the bicycle retaining device may have a shape which at least along a part thereof has a curved or bent shape. However, it may be preferred that at least an outer section of the support arm is straight, i.e. the section closest to the retaining claw.

The second claw part may be arranged to be movable by lateral translation in the longitudinal direction of the bicycle retaining device.

The second claw part may be arranged on an elongated sliding element, forming a shaft which may be arranged to be telescopically slidable inside a shaft portion of the bicycle retaining device such as inside the supporting arm. Such arrangement may be preferred when the second claw part is an outer claw part in the longitudinal direction of the bicycle retaining device.

Alternatively, the second claw part may be provided with an internal bore and may be slidably arranged on the outside of a shaft portion of the bicycle retaining device. Accordingly, the retaining claw may be opened and closed by sliding the second claw part along the shaft portion of the bicycle retaining device.

A further possibility is that the second claw part is arranged such that it can be rotated or tilted in relation to the first claw part, whereby the retaining claw is operated between an open and a closed position by rotating or tilting of the second claw part.

One arrangement for opening and closing the retaining claw that may be used is that disclosed in WO 03/106221 A1. Accordingly, the supporting arm may be a tube or may comprise a tube section at an outer end of the supporting arm. The retaining claw may be arranged at the outer end of the supporting arm with the second claw part extending laterally from the end of a shaft which is slidably inserted into the supporting arm. The shaft may be arranged to be spring loaded inside the supporting arm, e.g. by means of a coil spring, which acts on a first end of the shaft and rests with a second end on a support located in the supporting arm tube such that the second claw part is spring biased towards the maximum open position of the retaining claw. The shaft may further be connected by means of a cable to a tightening device mounted on the outside of the supporting arm. Operation of the tightening device causes the cable to pull the second claw part in a direction towards the first claw part against the biasing force of the spring coil or other spring member acting on the shaft.

The disclosure also refers to a bicycle carrier arrangement for carrying a bicycle on a transporting vehicle, wherein the bicycle carrier arrangement comprises a bicycle retaining device as set out herein.

The bicycle carrier arrangement may comprise a support structure on which the bicycle retaining device is mounted. The support structure may be a roof rack or a support structure for mounting at the rear of a vehicle. The bicycle retaining device may be mounted on the support structure with the supporting arm pivotably attached at an inner end to the support structure or with the supporting arm attached in a fixed position to the support structure.

When loading a bicycle in the bicycle carrier arrangement, the bicycle is applied with a frame element inserted between the parts of the retaining claw. The catch of the bicycle retaining device acts against the gravitational force and prevents a bicycle loaded onto the bicycle carrier arrangement from falling out of the retaining claw in an initial loading phase before the retaining claw has been moved to a retaining position. Accordingly, a user can safely adjust the bicycle in the bicycle carrier arrangement and secure wheels and other parts of the bicycle as well as tighten the claw parts without at the same time having to hold the bicycle in place. This means that the user may freely tighten any straps, and other retaining elements as well as closing the retaining claw without risking that the bicycle falls out of the bicycle carrier arrangement.

The bicycle carrier arrangement as disclosed herein may be adapted for mounting on a vehicle roof or for mounting at a rear of a vehicle. When mounted on a vehicle roof, the bicycle retaining device may be mounted with the supporting arm pivotably attached to a support structure, such as a roof rack and extending at an angle from the support structure upwards from a vehicle roof. When loading the bicycle into the bicycle carrier arrangement a frame element such as a main frame element is inserted between the first and second parts of the retaining claw. In an arrangement of this type, the first, stationary claw part will be a lower claw part and the second, movable claw part, will be an upper claw part, as seen in the vertical direction. The bicycle is lifted into the bicycle carrier arrangement while the retaining claw is in an open position. Preferably, the first and second abutment surfaces are at the maximum distance from each other in order to obtain a maximum gap between the claw parts, thus facilitating insertion of the frame element in the retaining claw. Once having lifted the bicycle such that the frame element has passed the catch which protrudes upwardly from the first (lower) claw part, the bicycle may be lowered until the frame element comes to rest against the bicycle abutment surface on the first (lower) claw part. In this position, the catch prevents the bicycle from tilting to a side and falling sideways out of the retaining claw.

Depending on the design of the bicycle carrier arrangement, the bicycle carrier arrangement may be configured to be attached in different ways to the bicycle carrier arrangement. Accordingly the bicycle carrier arrangement may be configured such that the first bicycle abutment surface of the bicycle retaining device is arranged to abut a frame element of a standing bicycle from below. The bicycle retaining device may be arranged with the supporting arm at an angle to the horizontal plane, such at an angle of from 20° to 90°.

The bicycle carrier arrangement may be configured such that the first bicycle abutment surface of the bicycle retaining device is arranged to abut a frame element of a bicycle from above. This configuration may be useful in a bicycle carrier arrangement adapted for transporting a bicycle in a hanging position.

The bicycle carrier arrangement may be configured such that the first bicycle abutment surface of the bicycle retaining device is arranged to abut a frame element of a standing bicycle from a side. Such configuration may be used, e.g. to grip a seat post in order to prevent the bicycle from rolling or moving forward/rearward. Although a seat post is generally arranged to be removable from the bicycle, for the purpose of the bicycle carrier arrangement as disclosed herein, it is considered to be a "frame element" when mounted on the bicycle regardless of whether it is removable or is permanently attached to the other parts of the bicycle frame.

With a "standing bicycle", as used herein, is implied a bicycle which is standing either on its wheels or upside-down.

It is also to be understood that the bicycle carrier arrangement as disclosed herein may be used to support and stabilize a bicycle which is standing up-side-down or a bicycle which is transported in a hanging position, e.g. by being hung on one or more hooks.

### BRIEF DESCRIPTION OF THE DRAWINGS

The present invention will be further explained hereinafter by means of non-limiting examples and with reference to the appended drawings wherein:
- Fig. 1: shows a bicycle retaining device in a closed position;
- Fig. 2: shows the bicycle retaining device in Fig. 1 in an open position and with a bicycle frame element being inserted into the bicycle retaining device;
- Fig. 3: shows the bicycle retaining device in Fig. 1 and 2 in an open position and with a bicycle frame element inserted into the bicycle retaining device;
- Fig. 4: shows the bicycle retaining device in Figs. 1-3 in a closed position with a bicycle frame element inserted into the bicycle retaining device;
- Fig. 5: shows a bicycle mounted on a vehicle roof; and
- Fig. 6: shows a bicycle mounted at the rear of a vehicle.

### DETAILED DESCRIPTION

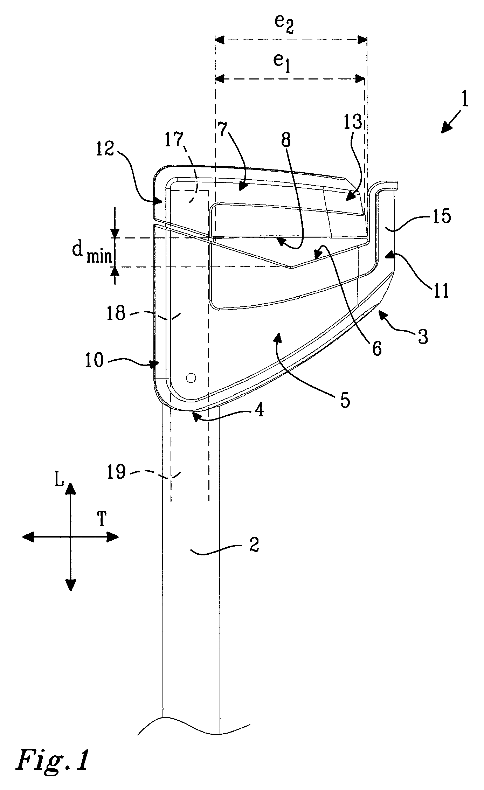

With reference to Figs. 1-4 there is shown a bicycle retaining device 1 for retaining a bicycle in a bicycle carrier arrangement on a transporting vehicle. The bicycle retaining device 1 comprises a supporting arm 2 which extends in a longitudinal direction L of the retaining device. The retaining device 1 comprises a retaining claw 3 which is arranged at an outer end 4 of the supporting arm 2. The retaining claw 3 comprises a first claw part 5 comprising a first bicycle abutment surface 6. The first claw part 5 is rigidly joined to the supporting arm 2. The retaining claw 3 further comprises a second claw part 7 comprising a second bicycle abutment surface 8. The second claw part 7 is arranged with the second bicycle abutment surface 8 facing the first bicycle abutment surface 6, as shown in Fig. 1.

The abutment surfaces 8 are those surfaces of the retaining claw 3 which are intended to be in contact with a bicycle frame element when the bicycle retaining device is used for retaining a bicycle in a bicycle carrier arrangement on a transporting vehicle. Accordingly, the abutment surfaces are preferably made of a non-abrasive material and may be pressure resilient. Suitable materials for the abutment surfaces include plastics and natural and synthetic rubber materials. In Fig. 1 the first abutment surface 5 is shown with a V-shaped profile. It is to be understood that the first abutment surface 5 may have any other suitable profile, such as the straight profile shown for the second abutment surface 7 or a curved profile. Correspondingly, the second abutment surface may be configured differently from what is shown in Figs. 1-4 and may have any suitable profile, including the profile shown for the first abutment surface 6 or a curved profile.

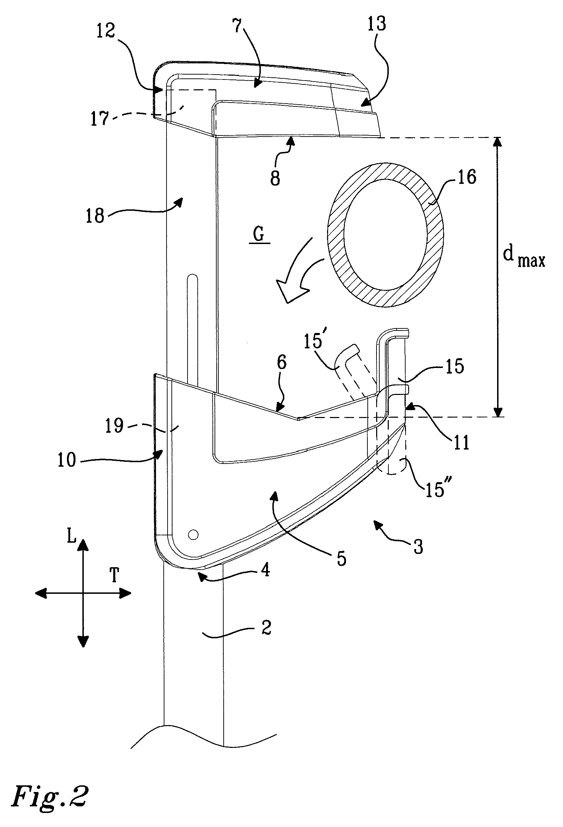

The second claw part 7 is arranged to be movable with respect to the supporting arm 2 and the first claw part 5 such that the distance, d, between the first and second bicycle abutment surfaces 6,8 is adjustable between a maximum distance dₘₐₓ as illustrated in Fig. 2 and a minimum distance dₘᵢₙ as illustrated in Fig. 1.

The first claw part 5 has an inner end 10 proximal to the supporting arm 2 and an outer end 11 distal from the supporting arm 2, and the second claw part 7 has an inner end 12 proximal to the supporting arm 2 and an outer end 13 distal from said supporting arm 2.

The bicycle retaining device 1 has a catch 15 which is arranged at the outer end 11 of the first claw part 5 and protruding from the outer end 11 of the first claw part 5 in a direction towards the second claw part 7. In the illustrated example, the catch 15 is shown to extend generally parallel with the longitudinal direction L of the supporting arm 2. In the shown embodiment, the catch 15 extends in the longitudinal direction L of the bicycle retaining device 1 outward of the outer end 13 of the second claw part 7. In other words, the extension e₁ of the second claw part 7 away from the supporting arm 2 in the lateral direction T of the retaining claw 3 is smaller than the distance between the supporting arm 2 and the catch 15 implying that the second claw part 7 can be fully accommodated inside the catch 15, as illustrated in Fig. 1.

In the illustrated embodiment, the first and second abutment surfaces 6,8 are shown to have the same lateral extension. However, this is not a necessary feature of the retaining device 1 as disclosed herein. By way of example, the upper/second claw part 7 and the second abutment surface 8 may have a smaller lateral extension than the lower/first claw part 5 and the first abutment surface 6. A design with a smaller upper/second claw part 7 may facilitate loading of a bicycle into the retaining device 1 as the opening into the gap G between the first and the second claw parts 5,7 is larger for the same distance of the claw parts 5,7 in the maximum open position of the retaining claw 3 than what is shown in Fig. 2.

In the embodiment in Figs. 1-4, the catch 15 is shown to be fixedly arranged in a catching position in which the catch 15 extends from the outer end 11 of the first claw part 5 toward the outer end 13 of the second claw part 7. When the bicycle retaining device 1 is in a maximum open position, as shown in Fig. 2, the catch protrudes from the first claw part 5 into the gap G between the first and the second claw parts 5,7 and partially bridges the maximum distance dₘₐₓ between the first and said second abutment surfaces 6,8.

As an alternative to a fixedly arranged catch 15, the catch may be pivotably attached to the outer end 11 of the first claw part 5 and may be movable to an inwardly tilted position with the free end of the catch 15' moved into the gap G between the first and the second claw parts 5,7, as indicated by dashed lines at 15' in Fig. 2. Preferably, the catch 15' is spring-biased toward the catching position, causing the catch 15' to automatically return to the catching position as soon as the inwardly pushing force is removed. A further alternative arrangement of a non-rigidly attached catch is indicated at 15" in Fig 2. The catch 15" is arranged to be movable out of the gap G between the first and the second claw parts 5,7 by pushing the catch 15" downward. Preferably, the catch 15" is spring-biased in the upward direction causing the catch 15" to automatically return to the catching position as soon as the downwardly pushing force is removed. The terms "inward", "downward" and "upward" refer to the orientation of the bicycle retaining device 1 as shown in Fig. 2. The catch is preferably arranged to move out of the catching position when contacted by a frame element 16 of a bicycle being loaded into the bicycle retaining device 1. A hollow bicycle frame element 16 is shown in cross-section in Figs. 2-4. As indicated in Fig. 2, the catch 15" may be arranged to move downward such that it protrudes from the side of the first claw part 5 that is opposite to the first bicycle abutment surface 6. Alternatively, the first claw part 5 may be shaped such that it can accommodate the retracted catch 15" in an internal passageway or cavity.

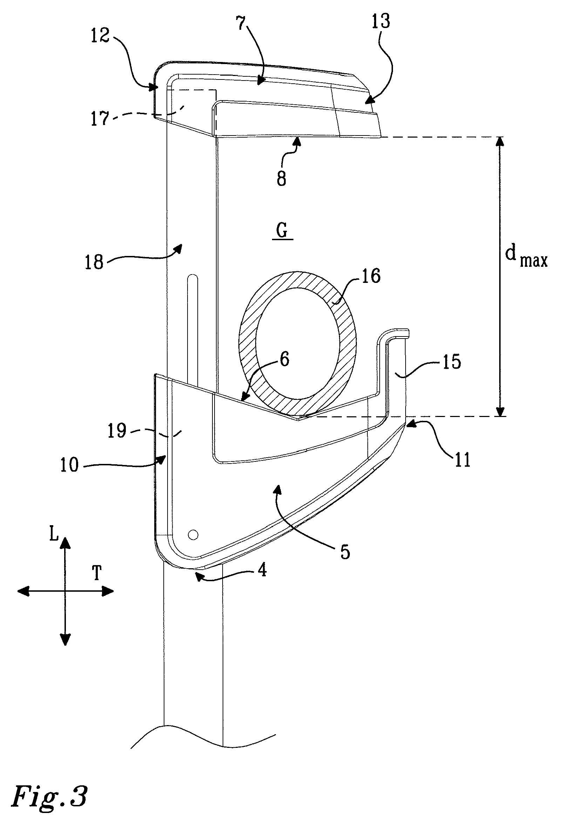

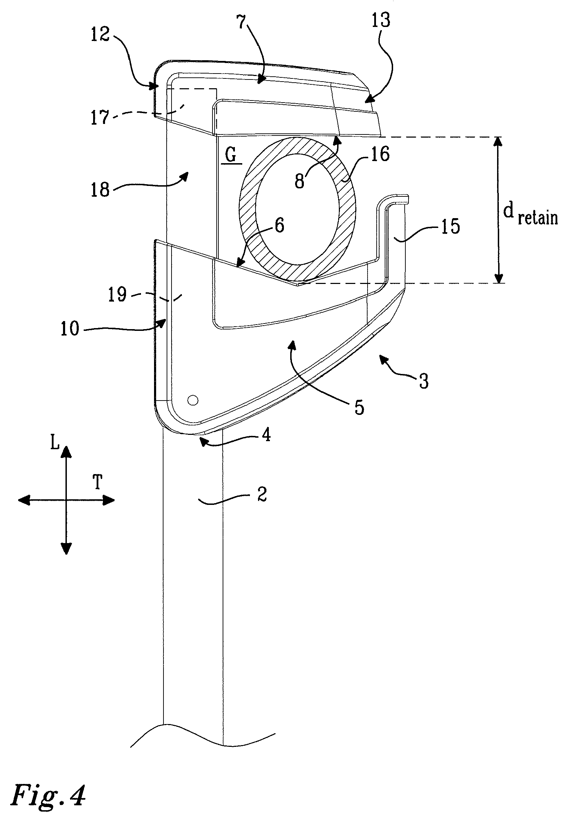

Fig. 2 illustrates a bicycle frame element 16 which is being inserted into the gap G between the first and the second claw parts 5,7 while the retaining claw 3 is in a maximum open position with the maximum distance dₘₐₓ between the first and said second abutment surfaces 6,8. The maximum distance dₘₐₓ is selected such that there is a sufficient distance between the catch 15 and the second claw part 7 to allow a bicycle frame element 16 to pass in between the first and the second claw parts 5,7. Preferably, the maximum distance dₘₐₓ is selected to allow the bicycle retaining device 1 to be used to retain frame elements 16 over a size range. In the maximum open position of the retaining claw 3, it can be seen that the second claw part 7 is attached at an outer end 17 of a shaft 18 which shaft 18 extends in the longitudinal direction L of the bicycle retaining device 1 and is inserted with an inner end 19 into a bore in the outer end 4 of the supporting arm 2. The shaft 18 is slidable arranged in a telescoping manner inside the supporting arm 2, and may be arranged to be operated between the open position shown in Figs. 2 and 3 and a closed position as shown in Figs. 1 and 4 by any suitable mechanism known to the person skilled in the art, such as the mechanism disclosed in WO 03/106221 A1 as set out herein.

In Fig. 3 is shown the bicycle frame element 16 fully inserted in the gap G between the first and the second claw parts 5,7 and resting against the first abutment surface 6. The retaining claw 3 is still in a maximum open position with the first and said second abutment surfaces 6,8 at their maximum mutual distance dₘₐₓ. In the position shown in Fig. 3 the bicycle frame element 16 is hindered by the catch 15 from moving out of the retaining claw 3 unless the frame element 16 is first moved toward the second abutment surface 8, i.e. in the upward direction as shown in Fig. 3. When arranged e.g. as shown in Fig. 3 with the second claw part 7 as an upper claw part positioned above the first claw part 5 in a vertical direction, the catch 15 acts against gravity to hold the bicycle frame element 16 in the retaining claw 3 and to prevent the bicycle from falling out of the retaining claw 3.

Accordingly, a user can safely perform additional steps, such as adjusting the bicycle in a bicycle carrier arrangement and secure wheels and other parts of the bicycle as well as tighten the claw parts 5,7 without at the same time having to hold the bicycle in place. This means that the user may freely tighten any straps, and other retaining elements as well as close the retaining claw 3 without risking that the bicycle moves out of the bicycle carrier arrangement 1 by mistake.

Fig. 4 shows the bicycle retaining device 1 with the retaining claw 3 in a retaining position, i.e. with the second claw part 7 being moved to a position intermediate the maximum open position in Figs. 2 and 3 and the completely closed position shown in Fig. 1. In the retaining position, the bicycle frame element 16 is clamped between the first and second abutment surfaces 6,8. The distance between the first and second bicycle abutment surfaces 6,8 in this position is the bicycle retaining distance dᵣₑₜₐᵢₙ. The bicycle retaining distance dᵣₑₜₐᵢₙ is preferably variable in order to accommodate differently sized bicycle frame elements 16.

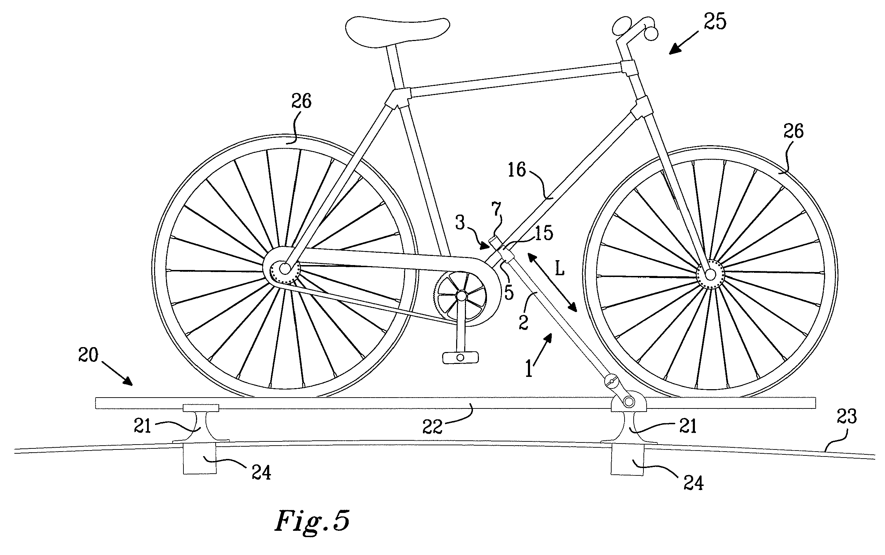

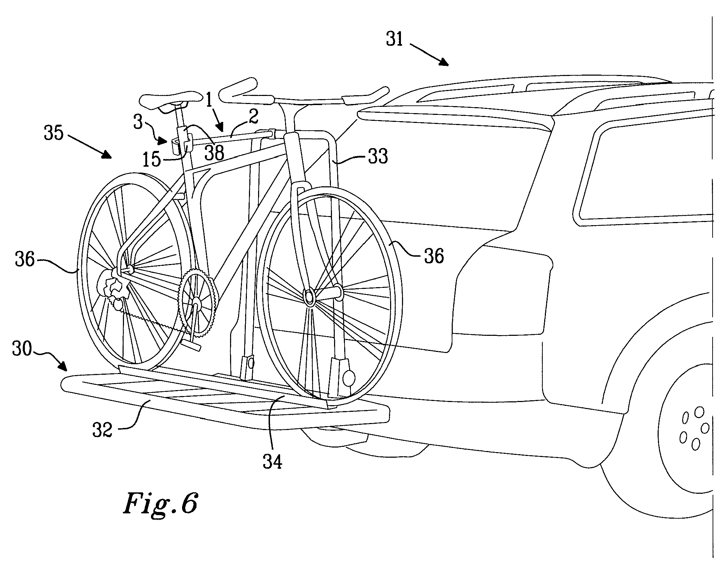

As shown in Figs. 5 and 6, the bicycle retaining device 1 as disclosed herein may be used in a bicycle carrier arrangement 20, 30. The embodiments shown in Figs. 5 and 6 are intended as examples only and should not be considered limiting to the invention. It is to be understood that a bicycle carrier arrangement according to the invention could take any suitable form, as known in the art and could include fewer or more elements than the shown embodiments, such as supports, fastener devices, etc.

With reference to Fig. 5, the bicycle carrier arrangement 20 comprises a roof rack 21 onto which a bike rail 22 and a bicycle retaining device 1 are mounted. The roof rack 21 is mounted on a vehicle roof 23, such as a car roof by means of forward and rearward attachment devices 24. With "forward" as used in this context is implied a location on the vehicle which is forward in the normal travelling direction of the vehicle and "rearward" implies a location which is rearward as seen in the normal travelling direction of the vehicle. A bicycle retaining device 1 is shown to be attached at the forward attachment device 24. However, it is to be understood that the bicycle retaining device 1 may be attached at any suitable location or element in the bicycle carrier arrangement 20. The bicycle retaining device 1 is pivotably attached in the bicycle carrier arrangement 20 at the end 25 of the supporting arm 2 which is located opposite to the outer end 4 at which the retaining claw 3 is arranged. In this manner, the bicycle retaining device 1 can be tilted in a suitable angle such that the retaining claw 3 is properly positioned with respect to a bicycle frame element 16 which is applied in the retaining claw 3.

A bicycle 25 is shown loaded into the bicycle carrier arrangement 20 with the wheels 26 of the bicycle being supported by the bike rail 22. Although the bike rail 22 is shown in the figure with a straight profile, the bicycle retaining device 1 as disclosed herein may also be used with curved bike rails such as the bike rails disclosed in WO 03/106221 A1.

The bicycle carrier arrangement 20 is shown in Fig. 5 with the retaining claw 3 of the bicycle retaining device 1 in the maximum open position, which may also be referred to as the loading position. As can be seen in the figure, the catch 15 on the first claw part 5 of the retaining claw 3 blocks the passage out of the retaining claw 3 and prohibits the bicycle 25 from falling to the side, out of the retaining claw 3. Accordingly, the bicycle 25 remains standing on the bike rail 22 while the person loading the bicycle 25 onto the bicycle carrier arrangement 20 finishes the loading procedure by adjusting the bicycle position, and securing any fixation elements including closing the bicycle retaining device 1 on the bicycle frame element 16, as set out herein.

Fig. 6 shows a further embodiment of a bicycle carrier arrangement 30 which bicycle carrier arrangement 30 is attached at the rear of a vehicle, shown as a car 31. The bicycle carrier arrangement 30 comprises a horizontally arranged support frame 32 with a bike rail 34 supporting the wheels 36 of the bicycle 35 and a vertically arranged support frame 33 extending upward from the horizontally arranged support frame 32.

A bicycle retaining device 1 as disclosed herein is arranged at an upper part of the vertically arranged support frame 33 and extends rearwards in a generally horizontal direction from the vertically arranged support frame 33 and grips a bicycle frame element, which in this case is the seat post 38 of the bicycle 35. In the shown configuration, with the retaining claw 3 in the maximum open position, the catch 15 prevents the bicycle from moving forward, out of the retaining claw 3.

## Claims

1. A bicycle retaining device (1) for retaining a bicycle in a bicycle carrier arrangement on a transporting vehicle, said bicycle retaining device comprising an elongated supporting arm (2) extending in a longitudinal direction (L) of said retaining device, said retaining device comprising a retaining claw (3) being arranged at an outer end (4) of said supporting arm (2), said retaining claw (3) comprising a first claw part (5) comprising a first bicycle abutment surface (6) and being connected to said supporting arm (2), and a second claw part (7) comprising a second bicycle abutment surface (8), said second claw part (7) being arranged with said second bicycle abutment surface (8) facing said first bicycle abutment surface (6), said second claw part (7) being arranged to be movable with respect to said supporting arm (2) and said first claw part (5) such that a distance (d) between said first and said second bicycle abutment surfaces (6,8) is adjustable between a maximum distance (dₘₐₓ) and a minimum distance (dₘᵢₙ),
said first claw part (5) has an inner end (10) proximal to said supporting arm (2) and an outer end (11) distal from said supporting arm (2), and said second claw part (7) has an inner end (12) proximal to said supporting arm (2) and an outer end (13) distal from said supporting arm (2), **characterized in that** a catch (15) is arranged at said outer end (11) of said first claw part (5), said catch (15) having a catching position with said catch (15) extending from said outer end (11) of said first claw part (5) in a direction toward said outer end (13) of said second claw part (7), said catch (15) being arranged to partially bridge said maximum distance (dₘₐₓ) between said first and said second abutment surfaces (6,8).

2. A bicycle retaining device in accordance with claim 1, wherein said second claw part (7) is positioned outward of said first claw part (5) at said outer end (4) of said supporting arm (2) or wherein said second claw part (7) is positioned inward of said first claw part (5) at said outer end (4) of said supporting arm (2).

3. A bicycle retaining device in accordance with claim 1 or 2, wherein said first claw part (5) is rigidly joined to said supporting arm (2).

4. A bicycle retaining device in accordance with any one of claims 1-3, wherein said catch (15) in said catching position is arranged to bridge at least 25% of said maximum distance (dₘₐₓ) between said first and said second abutment surfaces (6,8), but not more than 55% of said maximum distance (dₘₐₓ) between said first and said second abutment surfaces (6,8), such as from 30% to 45% of said maximum distance (dₘₐₓ) between said first and said second abutment surfaces (6,8).

5. A bicycle retaining device in accordance with any one of the preceding claims, wherein a lateral extension (e₂) of said first abutment surface (6) away from said supporting arm (2) is greater than a lateral extension (e₁) of said second claw part (7) away from said supporting arm (2), whereby said catch (15) being arranged at said outer end of said first claw part (5) is positioned laterally outward of said outer end (13) of said second claw part (7) in a lateral direction of said bicycle retaining device (1).

6. A bicycle retaining device in accordance with any one of the preceding claims, wherein said catch (15') is attached to said first claw part (5) with a hinge and is foldable inward at said hinge towards said first bicycle abutment surface (6) to assume a temporary loading position, said catch (15') preferably being spring biased towards said catching position.

7. A bicycle retaining device in accordance with any one of the preceding claims, wherein said catch (15) is arranged to be movable out of the loading gap by pulling or pushing in said longitudinal direction (L) of said bicycle retaining device (1), said catch (15") preferably being spring biased towards said catching position.

8. A bicycle retaining device in accordance with any one of the preceding claims, wherein said bicycle retaining device comprises a locking arrangement for locking said second claw part (7) in one or more bicycle clamping positions in relation to said first claw part (5).

9. A bicycle retaining device in accordance with any one of the preceding claims, wherein said second claw part (7) is arranged to be movable by lateral translation in said longitudinal direction (L) of said bicycle retaining device (1).

10. A bicycle retaining device in accordance with claim 9, wherein said second claw part (7) is arranged on an elongated sliding element (18), said elongated sliding element (18) being arranged to be telescopically slidable inside said supporting arm (2).

11. A bicycle carrier arrangement (20; 30) for carrying a bicycle on a transporting vehicle, wherein said bicycle carrier arrangement comprises a bicycle retaining device (1) in accordance with any one of claims 1-9.

12. A bicycle carrier arrangement in accordance with claim 11, wherein said bicycle carrier arrangement is adapted for mounting on a vehicle roof (23).

13. A bicycle carrier arrangement in accordance with any one of claims 11-12, wherein said first bicycle abutment surface (6) of said bicycle retaining device (1) is arranged to abut a frame element (16) of a standing bicycle (25) from below.

14. A bicycle carrier arrangement in accordance with any one of claims 11-12, wherein said first bicycle abutment surface (6) of said bicycle retaining device (1) is arranged to abut a frame element (38) of a standing bicycle (35) from a side of the frame element (38).

## Patentansprüche

1. Fahrradhaltevorrichtung (1) zum Halten eines Fahrrads in einer Fahrradträgeranordnung auf einem Transportfahrzeug, wobei die Fahrradhaltevorrichtung einen länglichen Stützarm (2) umfasst, der in eine Längsrichtung (L) der Haltevorrichtung verläuft, wobei die Haltevorrichtung eine Halteklaue (3) umfasst, die an einem äußeren Ende (4) des Stützarms (2) angeordnet ist, wobei die Halteklaue (3) einen ersten Klauenteil (5) umfasst, der eine erste Fahrradanlagefläche (6) umfasst und mit dem Stützarm (2) verbunden ist, und einen zweiten Klauenteil (7), der eine zweite Fahrradanlagefläche (8) umfasst, wobei der zweite Klauenteil (7) so angeordnet ist, dass die zweite Fahrradanlagefläche (8) der ersten Fahrradanlagefläche (6) gegenüberliegt, wobei der zweite Klauenteil (7) so angeordnet ist, dass er bezogen auf den Stützarm (2) und den ersten Klauenteil (5) derart beweglich ist, dass ein Abstand (d) zwischen der ersten und der zweiten Fahrradanlagefläche (6, 8) zwischen einem maximalen Abstand (d_{maX}) und einem minimalen Abstand (dₘᵢₙ) einstellbar ist,
wobei der erste Klauenteil (5) ein inneres Ende (10) proximal zu dem Stützarm (2) aufweist und ein äußeres Ende (11) distal zu dem Stützarm (2), und der zweite Klauenteil (7) ein inneres Ende (12) proximal zu dem Stützarm (2) und ein äußeres Ende (13) distal zu dem Stützarm (2) aufweist, **dadurch gekennzeichnet, dass**
eine Sperrvorrichtung (15) an dem äußeren Ende (11) des ersten Klauenteils (5) angeordnet ist, wobei die Sperrvorrichtung (15) eine Sperrposition aufweist, in der die Sperrvorrichtung (15) von dem äußeren Ende (11) des ersten Klauenteils (5) in eine Richtung auf das äußere Ende (13) des zweiten Klauenteils (7) zu verläuft, wobei die Sperrvorrichtung (15) so angeordnet ist, dass sie den maximalen Abstand (dₘₐₓ) zwischen der ersten und der zweiten Anlagefläche (6, 8) teilweise überbrückt.

2. Fahrradhaltevorrichtung nach Anspruch 1, wobei der zweite Klauenteil (7) außerhalb des ersten Klauenteils (5) an dem äußeren Ende (4) des Stützarms (2) platziert ist oder wobei der zweite Klauenteil (7) innerhalb des ersten Klauenteils (5) an dem äußeren Ende (4) des Stützarms (2) platziert ist.

3. Fahrradhaltevorrichtung nach Anspruch 1 oder 2, wobei der erste Klauenteil (5) starr mit dem Stützarm (2) verbunden ist.

4. Fahrradhaltevorrichtung nach einem der Ansprüche 1 bis 3, wobei die Sperrvorrichtung (15) in der Sperrposition so angeordnet ist, dass mindestens 25% des maximalen Abstands (d_{maX}) zwischen der ersten und der zweiten Anlagefläche (6, 8) überbrückt werden, jedoch nicht mehr als 55 % des maximalen Abstands (d_{maX}) zwischen der ersten und der zweiten Anlagefläche (6, 8), beispielsweise von 30 % bis 45 % des maximalen Abstands (d_{maX}) zwischen der ersten und der zweiten Anlagefläche (6, 8).

5. Fahrradhaltevorrichtung nach einem der vorhergehenden Ansprüche, wobei eine seitliche Ausdehnung (e₂) der ersten Anlagefläche (6) von dem Stützarm (2) weg größer ist als eine seitliche Ausdehnung (e₁) des zweiten Klauenteils (7) von dem Stützarm (2) weg, wodurch die Sperrvorrichtung (15), die an dem äußeren Ende des ersten Klauenteils (5) angeordnet ist, seitlich außerhalb des äußeren Endes (13) des zweiten Klauenteils (7) in einer seitlichen Richtung der Fahrradhaltevorrichtung (1) platziert ist.

6. Fahrradhaltevorrichtung nach einem der vorhergehenden Ansprüche, wobei die Sperrvorrichtung (15') an dem ersten Klauenteil (5) mit einem Scharnier befestigt ist und an dem Scharnier in Richtung der ersten Fahrradanlagefläche (6) nach innen klappbar ist, damit sie eine vorübergehende Beladeposition einnimmt, wobei die Sperrvorrichtung (15') vorzugsweise federnd in die Sperrposition vorgespannt ist.

7. Fahrradhaltevorrichtung nach einem der vorhergehenden Ansprüche, wobei die Sperrvorrichtung (15) so angeordnet ist, dass sie aus dem Beladespalt herausbewegbar ist, indem sie in der Längsrichtung (L) der Fahrradhaltevorrichtung (1) gezogen oder geschoben wird, wobei die Sperrvorrichtung (15") vorzugsweise federnd in die Sperrposition vorgespannt ist.

8. Fahrradhaltevorrichtung nach einem der vorhergehenden Ansprüche, wobei die Fahrradhaltevorrichtung eine Arretieranordnung zum Arretieren des zweiten Klauenteils (7) in einer oder mehreren Fahrradklemmpositionen bezogen auf den ersten Klauenteil (5) umfasst.

9. Fahrradhaltevorrichtung nach einem der vorhergehenden Ansprüche, wobei der zweite Klauenteil (7) so angeordnet ist, dass er durch eine seitliche Parallelverschiebung in der Längsrichtung (L) der Fahrradhaltevorrichtung (1) bewegbar ist.

10. Fahrradhaltevorrichtung nach Anspruch 9, wobei der zweite Klauenteil (7) auf einem länglichen Schiebeelement (18) angeordnet ist, wobei das längliche Schiebeelement (18) so angeordnet ist, dass es ausziehbar und einschiebbar in dem Stützarm (2) verschiebbar ist.

11. Fahrradträgeranordnung (20; 30) zum Tragen eines Fahrrads auf einem Transportfahrzeug, wobei die Fahrradträgeranordnung eine Fahrradhaltevorrichtung (1) nach einem der Ansprüche 1 bis 9 umfasst.

12. Fahrradträgeranordnung nach Anspruch 11, wobei die Fahrradträgeranordnung so ausgelegt ist, dass sie auf einem Fahrzeugdach (23) montiert wird.

13. Fahrradträgeranordnung nach Anspruch 11 oder 12, wobei die erste Fahrradanlagefläche (6) der Fahrradhaltevorrichtung (1) so angeordnet ist, dass sie an einem Rahmenelement (16) eines stehenden Fahrrads (25) von unten anliegt.

14. Fahrradträgeranordnung nach Anspruch 11 oder 12, wobei die erste Fahrradanlagefläche (6) der Fahrradhaltevorrichtung (1) so angeordnet ist, dass sie an einem Rahmenelement (38) eines stehenden Fahrrads (35) von einer Seite des Rahmenelements (38) aus anliegt.

## Revendications

1. Dispositif de retenue de bicyclette (1) destiné à retenir une bicyclette dans un ensemble porte-bicyclette sur un véhicule de transport, ledit dispositif de retenue de bicyclette comprenant un bras de support (2) allongé s'étendant dans une direction longitudinale (L) dudit dispositif de retenue, ledit dispositif de retenue comprenant une griffe de retenue (3) qui est agencée sur une extrémité extérieure (4) dudit bras de support (2), ladite griffe de retenue (3) comprenant une première partie de griffe (5) dotée d'une première surface d'appui de bicyclette (6) et raccordée audit bras de support (2), et une seconde partie de griffe (7) dotée d'une seconde surface d'appui de bicyclette (8), ladite seconde partie de griffe (7) étant agencée avec ladite seconde surface d'appui de bicyclette (8) faisant face à ladite première surface d'appui de bicyclette (6), ladite seconde partie de griffe (7) étant agencée pour être mobile par rapport audit bras de support (2) et à ladite première partie de griffe (5) de telle sorte qu'une distance (d) entre ladite première et ladite seconde surface d'appui de bicyclette (6, 8) est réglable entre une distance maximale (dₘₐₓ) et une distance minimale (dₘᵢₙ),
ladite première partie de griffe (5) présentant une extrémité intérieure (10) proximale audit bras de support (2) et une extrémité extérieure (11) distale dudit bras de support (2) et ladite seconde partie de griffe (7) présentant une extrémité intérieure (12) proximale audit bras de support (2) et une extrémité extérieure (13) distale dudit bras de support (2), **caractérisé en ce que**
un dispositif d'arrêt (15) est agencé sur ladite extrémité extérieure (11) de ladite première partie de griffe (5), ledit dispositif d'arrêt (15) comportant une position d'arrêt dans laquelle ledit dispositif d'arrêt (15) s'étend de ladite extrémité extérieure (11) de ladite première partie de griffe (5) dans une direction vers l'extrémité extérieure (3) de ladite seconde partie de griffe (7), ledit dispositif d'arrêt (15) étant agencé pour couvrir partiellement ladite distance maximale (dₘₐₓ) entre ladite première et ladite seconde surface d'appui (6, 8).

2. Dispositif de retenue de bicyclette selon la revendication 1, dans lequel ladite seconde partie de griffe (7) est positionnée à l'extérieur de ladite première partie de griffe (5) sur ladite extrémité extérieure (4) dudit bras de support (2) ou dans lequel ladite seconde partie de griffe (7) est positionnée à l'intérieur de ladite première partie de griffe (5) sur ladite extrémité extérieure (4) dudit bras de support (2).

3. Dispositif de retenue de bicyclette selon la revendication 1 ou 2, dans lequel ladite première partie de griffe (5) est reliée de manière rigide audit bras de support (2).

4. Dispositif de retenue de bicyclette selon l'une quelconque des revendications 1 à 3, dans lequel ledit dispositif d'arrêt (15) dans ladite position d'arrêt est agencé pour couvrir au moins 25 % de ladite distance maximale (dₘₐₓ) entre ladite première et ladite seconde surface d'appui (6, 8) mais pas plus de 55 % de ladite distance maximale (dₘₐₓ) entre ladite première et ladite seconde surface d'appui (6, 8), par exemple de 30 % à 45 % de ladite distance maximale (dₘₐₓ) entre ladite première et ladite seconde surface d'appui (6, 8).

5. Dispositif de retenue de bicyclette selon l'une quelconque des revendications précédentes, dans lequel une extension latérale (e₂) de ladite première surface d'appui (6) dans une direction s'éloignant dudit bras de support (2) est supérieure à une extension latérale (e₁) de ladite seconde partie de griffe (7) dans une direction s'éloignant dudit bras de support (2), ce par quoi ledit dispositif d'arrêt (15) agencé sur ladite extrémité extérieure de ladite première partie de griffe (5) est positionné latéralement à l'extérieur de ladite extrémité extérieure (13) de ladite seconde partie de griffe (7) dans une direction latérale dudit dispositif de retenue de bicyclette (1).

6. Dispositif de retenue de bicyclette selon l'une quelconque des revendications précédentes, dans lequel ledit dispositif d'arrêt (15') est fixé à ladite première partie de griffe (5) avec une charnière et il est pliable vers l'intérieur sur ladite charnière vers ladite première surface d'appui de bicyclette (6) afin d'adopter une position de chargement temporaire, ledit dispositif d'arrêt (15') étant de préférence sollicité par ressort vers ladite position d'arrêt.

7. Dispositif de retenue de bicyclette selon l'une quelconque des revendications précédentes, dans lequel ledit dispositif d'arrêt (15) est agencé pour être mobile hors de l'interstice de chargement en tirant ou en poussant dans ladite direction longitudinale (L) dudit dispositif de retenue de bicyclette (1), ledit dispositif d'arrêt (15") étant de préférence sollicité par ressort vers ladite position d'arrêt.

8. Dispositif de retenue de bicyclette selon l'une quelconque des revendications précédentes, dans lequel ledit dispositif de retenue de bicyclette comprend un ensemble de verrouillage destiné à verrouiller ladite seconde partie de griffe (7) dans une ou plusieurs positions de serrage de bicyclette par rapport à ladite première partie de griffe (5).

9. Dispositif de retenue de bicyclette selon l'une quelconque des revendications précédentes, dans lequel ladite seconde partie de griffe (7) est agencée pour être mobile par translation latérale dans ladite direction longitudinale (L) dudit dispositif de retenue de bicyclette (1).

10. Dispositif de retenue de bicyclette selon la revendication 9, dans lequel ladite seconde partie de griffe (7) est agencée sur un élément coulissant allongé (18), ledit élément coulissant allongé (18) étant agencé pour être coulissant de manière télescopique à l'intérieur dudit bras de support (2).

11. Ensemble porte-bicyclette (20 ; 30) destiné à porter une bicyclette sur un véhicule de transport, dans lequel ledit ensemble porte-bicyclette comprend un dispositif de retenue de bicyclette (1) selon l'une quelconque des revendications 1 à 9.

12. Ensemble porte-bicyclette selon la revendication 11, dans lequel ledit ensemble porte-bicyclette est adapté pour être monté sur un toit de véhicule (23).

13. Ensemble porte-bicyclette selon l'une quelconque des revendications 11-12, dans lequel ladite première surface d'appui de bicyclette (6) dudit dispositif de retenue de bicyclette (1) est agencée pour appuyer contre un élément de cadre (16) d'une bicyclette (25) placée debout par le bas.

14. Ensemble porte-bicyclette selon l'une quelconque des revendications 11-12, dans lequel ladite première surface d'appui de bicyclette (6) dudit dispositif de retenue de bicyclette (1) est agencée pour appuyer contre un élément de cadre (38) d'une bicyclette (35) placée debout par un côté de l'élément de cadre (38).
